# FASCICULE DE BREVET EUROPEEN

(11) **EP 3 044 729 B1**
(45) Date de publication et mention de la délivrance du brevet: **11.05.2022**
(21) Numéro de dépôt: 14815344.8
(22) Date de dépôt: 17.12.2014
(51) Int. Cl.: G06K 9/00

(54) **PROCÉDÉ DE VALIDATION DESTINÉ À VALIDER QU'UN ÉLÉMENT EST RECOUVERT D'UNE VRAIE PEAU**
VALIDIERUNGSVERFAHREN ZUR VALIDIERUNG DER ABDECKUNG EINES ELEMENTS DURCH ECHTE HAUT
METHOD OF VALIDATION INTENDED TO VALIDATE THAT AN ELEMENT IS COVERED BY A TRUE SKIN

(30) Priorité: 19.12.2013 FR 1362977
(43) Date de publication de la demande: 20.07.2016
(73) Titulaire: Idemia Identity & Security France, 92400 Courbevoie (FR)
(72) Inventeur: BESSON, Adrien, F-92445 Issy Les Moulineaux (FR); THIEBOT, Alain, F-92445 Issy Les Moulineaux (FR); DUMONT, Denis, F-92445 Issy Les Moulineaux (FR); LORENZI, Jérôme, F-92445 Issy Les Moulineaux (FR)
(74) Mandataire: Chauvin, Karen Laurence
(86) Numéro de dépôt international: PCT/EP2014/078320
(87) Numéro de publication internationale: WO 2015/091701

(56) Documents cités:
- US-A1- 2012 033 063
- US-A1- 2012 218 397
- D. Maltoni: "Handbook of Fingerprint Recognition, 2nd ed", 1 janvier 2009 (2009-01-01), Springer, XP002737503, pages 386-391, page 387, alinéa 4 - page 388, alinéa 1
- N. K. Ratha et al: "Advances in Biometrics", 1 janvier 2008 (2008-01-01), Springer, XP002737504, pages 3-23, le document en entier
- S. Marcel et al.: "Handbook of Biometric Anti-Spoofing", 1 janvier 2014 (2014-01-01), Springer, XP002737505, pages 35-64, page 39, alinéa 4
- S.Z. Li: "Encyclopedia Biometrics", 1 janvier 2009 (2009-01-01), Springer, XP002737506, pages 924-931, le document en entier
- G. Chetty et al: "Advanced Biometric Technologies", 1 janvier 2011 (2011-01-01), Intech, XP002737507, pages 179-198, page 188, alinéa 1 page 191, dernier alinéa - page 192, alinéa 3

## Description

La présente invention se rapporte au domaine de la détection de fraude dans le domaine de l'identification/authentification par biométrie. L'invention concerne plus particulièrement un procédé de validation destiné à valider qu'un élément est recouvert d'une vraie peau en particulier dans le cadre d'une analyse biométrique, ainsi qu'un dispositif de validation mettant en œuvre un tel procédé.

Un dispositif d'identification d'un individu par son empreinte digitale/palmaire consiste en un capteur, un moyen de comparaison, un moyen de prise de décision.

Le capteur présente un dispositif d'éclairage et un dispositif d'acquisition permettant la capture d'images d'une ou plusieurs empreintes digitales ou palmaires. Un gabarit est ensuite extrait de chaque empreinte digitale ou palmaire mettant en évidence ses caractéristiques discriminantes. Le moyen de comparaison compare l'image capturée ou les gabarits biométriques qui sont issus de l'image avec les images ou les gabarits biométriques d'une base de données qui rassemble les images ou gabarits de personnes préalablement enregistrées dans le dispositif d'identification. Le moyen de prise de décision est destiné à prendre une décision quant à l'identification de l'individu à partir du résultat des comparaisons.

Certains individus mal intentionnés tentent de se faire identifier frauduleusement en utilisant des leurres afin d'induire en erreur le dispositif d'identification.

Différents procédés de validation sont connus pour valider le fait que la peau présente devant le capteur est vraie et donc que le doigt porteur de l'empreinte digitale est un vrai doigt.

Certains procédés connus reposent entièrement en l'analyse d'images notamment par identification des artefacts de réalisation de fraudes. Ces procédés ne sont cependant pas robustes aux fraudes soignées.

D'autres procédés sont également connus pour capturer une série d'images du doigt et pour mesurer par exemple la sudation, le pouls, l'oxymétrie, le blanchiment du doigt au cours de l'appui sur la surface de capture.

De tels procédés nécessitent notamment un temps d'acquisition incompressible car lié à la vitesse d'évolution du phénomène observé ce qui dégrade l'ergonomie du capteur.

Le document US2012/033063 A1 décrit un procédé pour la reconnaissance de la peau naturelle lors de l'identification biométrique sans contact, dans lequel la surface de la peau est éclairée à un point d'irradiation avec une lumière du spectre visible ou du spectre adjacent. Dans ce document la partie de la lumière entrant à travers la surface de la peau au point d'irradiation, diffusée dans la peau et sortant à nouveau de la surface de la peau, est détectée à un point de détection, à l'aide détecteur et le signal déterminé par le détecteur est transmis à un comparateur et comparé aux données stockées.

Le document US-A-2012/218397 décrit un dispositif qui est prévu pour détecter si un doigt est vrai ou faux. Le dispositif comporte une source lumineuse qui éclaire le doigt et un capteur d'images qui capture une image du doigt. Le flux lumineux qui éclaire le doigt pénètre dans le doigt et s'y diffuse. Le flux lumineux ainsi diffusé s'extrait du doigt au niveau d'une zone de diffusion qui est à distance de la zone du doigt qui est éclairée par la source lumineuse. Pour vérifier que le doigt est vrai ou faux, le capteur d'images est disposé de manière à capturer une image uniquement de la zone de diffusion. Les caractéristiques de cette image sont alors analysées pour vérifier que le doigt est vrai ou faux.

Un tel dispositif ne se base donc que sur une image de la zone de diffusion et dans certains cas de fraude, cela peut ne pas être suffisant.

Un objet de la présente invention est de proposer un procédé de validation destiné à valider qu'un élément est recouvert d'une vraie peau et qui ne présente pas les inconvénients de l'état de la technique.

A cet effet, est proposé un procédé de validation destiné à valider qu'un élément est recouvert d'une vraie peau et mis en œuvre par un dispositif de validation comportant une source lumineuse à au moins une longueur d'onde, un capteur, un module d'analyse et un module de prise de décision, ledit procédé de validation comportant:
- une étape de positionnement au cours de laquelle une surface dudit élément est placée devant la source lumineuse et le capteur,
- une étape d'éclairement au cours de laquelle la source lumineuse éclaire ledit élément,
- une étape de capture pour capturer, au moyen dudit capteur, pour la ou chaque longueur d'onde, une image dudit élément ainsi positionné qui englobe une zone éclairée dudit élément directement éclairée par le faisceau lumineux émis par la source lumineuse et une zone périphérique dite zone de diffusion dudit élément qui est périphérique à ladite zone éclairée,
- une étape d'analyse au cours de laquelle la ou chaque image ainsi capturée est analysée, et
- une étape de prise de décision au cours de laquelle le module de prise de décision prend une décision quant au fait que ledit élément est recouvert d'une vraie peau en fonction des résultats de l'étape d'analyse.

Avantageusement, l'étape d'analyse consiste, pour la ou chaque image, à découper une zone d'analyse recouvrant la zone éclairée et la zone de diffusion en plusieurs zones de calcul, à établir, une intensité moyenne pour chaque zone de calcul, une courbe d'intensité et une courbe du gradient d'intensité en fonction de la distance de la zone de calcul à la limite de la zone éclairée et à comparer des caractéristiques de ces courbes à celles extraites de courbes de référence.

Avantageusement, la source lumineuse émet dans au moins deux longueurs d'ondes distinctes, et l'étape d'analyse consiste en outre à établir, pour chaque zone de calcul de ladite zone d'analyse, la courbe du rapport d'intensité pour deux longueurs d'ondes distinctes en fonction de la distance de ladite zone de calcul à la limite de la zone éclairée, et la courbe du rapport du gradient d'intensité pour deux longueurs d'ondes distinctes en fonction de la distance de ladite zone de calcul à la limite de la zone éclairée et à comparer des caractéristiques de ces courbes à celles extraites de courbes de référence.

Selon un mode de réalisation particulier, la source lumineuse est rectangulaire, et le découpage de la zone d'analyse consiste, pour la ou chaque image, à découper ladite image en plusieurs bandes rectangulaires dont les bords sont équidistants des bords de la zone éclairée.

Selon un mode de réalisation particulier, la source lumineuse est circulaire, et le découpage de la zone d'analyse consiste, pour la ou chaque image, à découper ladite image en plusieurs anneaux concentriques et centrés sur le centre de la zone éclairée.

Avantageusement, la source lumineuse émet dans une longueur d'onde entre 350 et 550 nm et une longueur d'onde supérieure à 600 nm.

L'invention propose également un dispositif de validation destiné à valider qu'un élément est recouvert d'une vraie peau, ledit dispositif de validation comportant:
- une source lumineuse émettant au moins une longueur d'onde, et destinée à éclairer ledit élément,
- un capteur configuré pour capturer, pour la ou chaque longueur d'onde, une image dudit élément positionné devant la source lumineuse et le capteur qui englobe une zone éclairée dudit élément directement éclairée par le faisceau lumineux émis par la source lumineuse et une zone périphérique dite zone de diffusion dudit élément qui est périphérique à ladite zone éclairée,
- un module d'analyse destiné à recevoir la ou chaque image capturée par le capteur et à l'analyser, et
- un module de prise de décision destiné à prendre une décision sur le fait que ledit élément est recouvert d'une vraie peau, à partir des informations transmises par le module d'analyse.

Avantageusement, le module d'analyse comporte, pour la ou chaque image, des moyens pour découper une zone d'analyse recouvrant la zone éclairée et la zone de diffusion en plusieurs zones de calcul, des moyens pour établir, pour chaque zone de calcul, l'intensité moyenne de ladite zone de calcul, pour établir la courbe d'intensité et la courbe du gradient d'intensité en fonction de la distance de la zone de calcul à la limite de la zone éclairée et des moyens pour comparer des caractéristiques de ces courbes à celles extraites de courbes de référence.

Avantageusement, la source lumineuse émet dans au moins deux longueurs d'ondes distinctes, le module d'analyse comporte en outre des moyens pour établir, pour chaque zone de calcul de la zone d'analyse, la courbe du rapport d'intensité pour deux longueurs d'ondes distinctes en fonction de la distance de ladite zone de calcul à la limite de la zone éclairée, et la courbe du rapport du gradient d'intensité pour deux longueurs d'ondes distinctes en fonction de la distance de ladite zone de calcul à la limite de la zone éclairée et des moyens pour comparer des caractéristiques de ces courbes à celles extraites de courbes de référence.

Selon un mode de réalisation particulier, la source lumineuse est rectangulaire, et le module d'analyse comporte, pour la ou chaque image, des moyens pour découper ladite image en plusieurs bandes rectangulaires dont les bords sont équidistants des bords de la zone éclairée.

Selon un mode de réalisation particulier, la source lumineuse est circulaire, et le module d'analyse comporte, pour la ou chaque image, des moyens pour découper ladite image en plusieurs anneaux concentriques et centrés sur le centre de la zone éclairée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une représentation schématique d'un dispositif de validation selon l'invention,
la Fig. 2a est une image d'une empreinte digitale vue par le dispositif de validation selon un mode de réalisation de l'invention,
la Fig. 2b est une image d'une empreinte digitale vue par le dispositif de validation selon un autre mode de réalisation de l'invention,
la Fig. 3 est un algorithme d'un procédé de validation selon l'invention,
la Fig. 4 montre la réflectance d'un vrai doigt en fonction de la longueur d'onde du flux lumineux qui l'éclaire,
la Fig. 5 montre un exemple d'une courbe d'intensité, et
la Fig. 6 montre une courbe représentative de la pénétration en cm de la lumière dans la peau en fonction de la longueur d'onde.

Le principe de l'invention consiste à valider qu'un élément, en particulier la surface inférieure d'un ou plusieurs doigts ou de la paume, est recouvert d'une vraie peau et donc est une partie d'un corps humain. Le principe de l'invention peut également s'appliquer à d'autres parties du corps humain comme le visage. Le principe de l'invention consiste plus précisément à éclairer la surface de l'élément à l'aide d'une source lumineuse permettant de n'éclairer qu'une zone bien définie de l'élément et de conserver une zone sans illumination directe, à capturer une image de ces deux zones, à savoir la zone directement éclairée et la zone non directement éclairée, et à analyser cette image pour en déduire que ledit élément est couvert d'une vraie peau ou d'une fausse peau.

L'éclairage peut être réalisé via une capture d'images sans contact ou avec contact au travers d'une surface de contact, en particulier un prisme ou une lame optique

Dans la suite de la description, l'élément est un doigt, mais l'invention s'applique à toutes autres parties du corps, comme plusieurs doigts, une paume ou un visage.

En particulier, une réalisation avantageuse permet une transition franche entre la zone éclairée directement et la zone sans éclairage direct. Un exemple de réalisation peut être une ou plusieurs sources lumineuses ponctuelles d'étalement faible ou une ou plusieurs lignes.

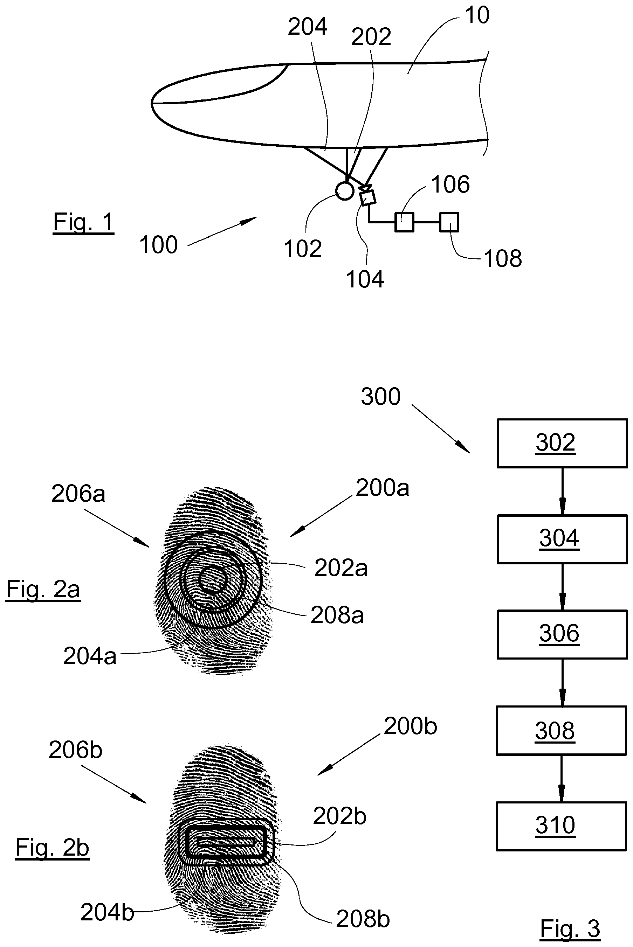

La Fig. 1 montre un dispositif de validation 100 qui est destiné à valider qu'un élément 10, ici un doigt, est recouvert d'une vraie peau et est donc un vrai doigt 10.

Le dispositif de validation 100 comporte:
- une source lumineuse 102 à au moins une longueur d'onde destinée à éclairer une surface du doigt 10, et
- un capteur 104 destiné à capturer, pour la ou chaque longueur d'onde, une image 200a-b qui comme cela est décrit ci-après comprend à la fois la surface éclairée directement par la source lumineuse 102 et la surface non éclairée immédiatement voisine de la surface éclairée, c'est-à-dire une image 200a-b présentant une zone de réflexion 202a-b où le faisceau lumineux émis par la source lumineuse 102 est directement réfléchi par ledit élément 10 et une zone de diffusion 204a-b où une partie du faisceau lumineux est diffusée à travers ledit élément 10.

Dans la suite de la description, la zone de réflexion 202a-b est appelée zone éclairée 202a-b et est limitée à la zone de l'élément 10 qui est directement éclairée par le faisceau lumineux, et la zone de diffusion 204a-b est la zone de l'élément 10 qui n'est pas éclairée directement par le faisceau lumineux mais qui reçoit et émet de la lumière par diffusion dans l'élément 10 du faisceau lumineux.

Le dispositif de validation 100 comporte également:
- un module d'analyse 106 destiné à recevoir la ou chaque image 200a-b capturée par le capteur 104 et à l'analyser comme cela est décrit ci-après, et
- un module de prise de décision 108 destiné à prendre une décision sur le fait que le doigt 10 est recouvert d'une vraie peau, à partir des informations transmises par le module d'analyse 106.

La Fig. 2a montre une image 200a capturée par le capteur 104 dans le cas d'une source lumineuse 102 circulaire.

La Fig. 2b montre une image 200b capturée par le capteur 104 dans le cas d'une source lumineuse 102 rectangulaire.

La source lumineuse 102 présente une ouverture angulaire réduite dans au moins une direction, de manière à ce que l'éclairage de la surface ne soit pas uniforme sur toute l'image 200a-b et soit limitée à une zone restreinte constituant la zone éclairée 202a-b.

Ainsi, la surface du doigt 10 est éclairée au niveau de la zone éclairée 202a-b où le faisceau lumineux émis par la source lumineuse 102 éclaire directement la surface (on image donc la lumière rétrodiffusée, comportant une composante de réflexion diffuse) et la surface du doigt 10 s'illumine au niveau d'une zone périphérique dite zone de diffusion 204a-b (non illuminée directement par la source lumineuse 102) du fait qu'une partie du faisceau lumineux est transmise dans le doigt 10, et est ensuite diffusée au niveau de la zone de diffusion 204a-b qui s'étend sur la périphérie de la zone éclairée 202a-b.

L'image 200a-b qui est capturée par le capteur 104 montre la zone éclairée 202a-b et la zone de diffusion 204a-b associée et l'analyse simultanée de ces zones 202a-b et 204a-b permet de conclure que le doigt 10 est vrai ou faux.

L'éclairage de la surface est dit non uniforme sur toute l'image 200a-b lorsque la zone éclairée 202a-b et la zone de diffusion 204a-b sont visibles simultanément par le capteur 104 mais que la zone de diffusion 204a-b ne subit pas l'éclairage direct de la source lumineuse 102 contrairement à la zone éclairée 202a-b.

L'analyse tient donc compte à la fois de la réflexion sur le doigt 10 et de la diffusion par le doigt 10 et non uniquement d'un seul de ces deux phénomènes.

Ainsi, même si un leurre est utilisé en lieu et place d'un vrai doigt, il sera difficile de réaliser un leurre présentant les caractéristiques optiques propres à un vrai doigt pour la réflexion et pour la diffusion.

Dans le cas particulier d'une capture avec contact et pour faciliter le positionnement et le maintien du doigt 10 lors de la capture de l'image 200a-b, le dispositif de validation 100 peut comporter une surface de capture sur laquelle le doigt 10 est mis en appui et qui permet le guidage de la lumière entre la source lumineuse 102, le doigt 10, et le capteur 104.

Dans certaines réalisations avec contact, une lame translucide est interposée entre le doigt 10 et le capteur 104 et la source lumineuse 102.

La Fig. 3 est un algorithme d'un procédé de validation 300 destiné à valider que le doigt 10 est recouvert d'une vraie peau et mis en œuvre par le dispositif de validation 100.

Le procédé de validation 300 comporte:
- une étape de positionnement 302 au cours de laquelle une surface du doigt 10 est placée devant le dispositif de validation 100, et plus particulièrement devant la source lumineuse 102 et le capteur 104,
- une étape d'éclairement 304 au cours de laquelle la source lumineuse 102 éclaire le doigt 10 de manière à ce que la surface du doigt 10 présente la zone éclairée 202a-b et la zone de diffusion,
- une étape de capture 306 au cours de laquelle le capteur 104 capture, pour la ou chaque longueur d'onde, une image 200a-b de la zone éclairée 202a-b et de la zone de diffusion 204a-b,
- une étape d'analyse 308 au cours de laquelle la zone éclairée 202a-b et la zone de diffusion 204a-b de la ou chaque image 200a-b ainsi capturée sont analysées, et
- une étape de prise de décision 310 au cours de laquelle le module de prise de décision 108 prend une décision quant au fait que le doigt 10 est recouvert d'une vraie peau en fonction des résultats de l'étape d'analyse 308.

L'étape d'analyse 308 consiste, pour la ou chaque image 200a-b, à découper une zone d'analyse 206a-b recouvrant à la fois la zone éclairée 202a-b et la zone de diffusion 204a-b en plusieurs zones de calcul 208a-b, à établir une intensité moyenne pour chaque zone de calcul 208a-b, une courbe d'intensité et une courbe du gradient d'intensité en fonction de la distance de ladite zone de calcul 208a-b à une origine et à comparer des caractéristiques de ces courbes à celles extraites de courbes de référence.

L'analyse simultanée de la zone éclairée 202a-b et la zone de diffusion 204a-b permet d'avoir des informations sur la réflexion et sur la diffusion du doigt 10 et donc d'avoir des informations complémentaires qui en une seule capture et une seule analyse permettent de déterminer la véracité du doigt 10. Un tel procédé permet donc un gain de temps et une meilleure robustesse à des tentatives de fraudes.

L'origine de la zone d'analyse 206a-b dépend de la forme de celle-ci et est déterminée grâce à l'utilisation de méthodes d'analyse de formes connues par l'homme du métier telles que des méthodes de squelettisation et ebarbulation. Ces méthodes permettent de s'assurer que chaque point de l'origine est équidistant du point de la zone éclairée 202a-b la plus proche.

La distance utilisée est par exemple et classiquement la distance minimale entre le contour de la zone de calcul 208a-b et le contour de la zone éclairée 202a-b.

Dans le cas particulier d'un éclairage circulaire (Fig. 2a), la zone éclairée 202a et la zone de diffusion 204a sont des cercles concentriques, et l'origine est fixée sur la limite de la zone éclairée 202a. La zone d'analyse 206a est divisée en zones de calcul 208a qui sont ici des anneaux 208a concentriques à la zone éclairée 202a.

Dans le cas particulier d'un éclairage rectangulaire (Fig. 2b), la zone éclairée 202b est un rectangle et la zone de diffusion 204b est un rectangle plus grand dont les bords sont équidistants des bords de la zone éclairée 202b, et l'origine est fixée sur la limite de la zone éclairée 202b. La zone d'analyse 206b est divisée en zones de calcul 208b qui sont ici des bandes rectangulaires 208b dont les bords sont équidistants des bords de la zone éclairée 202b et dont les coins sont arrondis de manière exagérée pour montrer la constance de la distance entre le contour de la zone de calcul 208b et le contour de la zone éclairée 202b.

La limite de la zone éclairée 202a-b qui sert d'origine est déterminée par exemple par un processus de calibration basé sur l'acquisition d'une image de mire blanche non diffusante au travers du capteur sous un éclairage non uniforme tel que défini précédemment. L'image obtenue par capture de ce matériau ne reflète que l'effet de réflexion directe et non l'effet de diffusion de par la nature du matériau. Les défauts d'éclairages pouvant être observés (par exemple, la non-uniformité dans la zone de réflexion directe, c'est-à-dire la zone éclairée 202a-b) seront compensés lors du calcul des profils d'intensité pour obtenir un plateau d'intensité dans la zone de réflexion directe. La limite de la zone de réflexion directe est définie en chaque point du contour de la source, c'est-à-dire en chaque point limite du plateau d'intensité mesuré sur le matériau non diffusant.

Le module d'analyse 106 comporte alors, pour la ou chaque image 200a-b, des moyens pour découper la zone d'analyse 206a-b en plusieurs zones de calcul 208a-b, des moyens pour établir, pour chaque zone de calcul 208a-b, l'intensité moyenne de ladite zone de calcul 208a-b, et pour établir ensuite la courbe d'intensité en fonction de la distance de la zone de calcul 208a-b à l'origine et la courbe du gradient d'intensité en fonction de la distance de la zone de calcul 208a-b à l'origine et des moyens pour comparer des caractéristiques de ces courbes à celles extraites de courbes de référence.

Les caractéristiques à comparer sont extraites de chaque image 200a-b avantageusement préalablement traitées en vue de ne pas prendre en compte les pixels du fond. Un exemple d'un tel traitement est l'application d'un filtre fréquentiel simple ou l'utilisation d'un masque de localisation des pixels de crête généré par un extracteur de gabarit.

Les caractéristiques à comparer sont ainsi en particulier la valeur absolue de l'intensité de chaque zone de calcul 208a-b et le gradient d'intensité en chaque zone de calcul 208a-b.

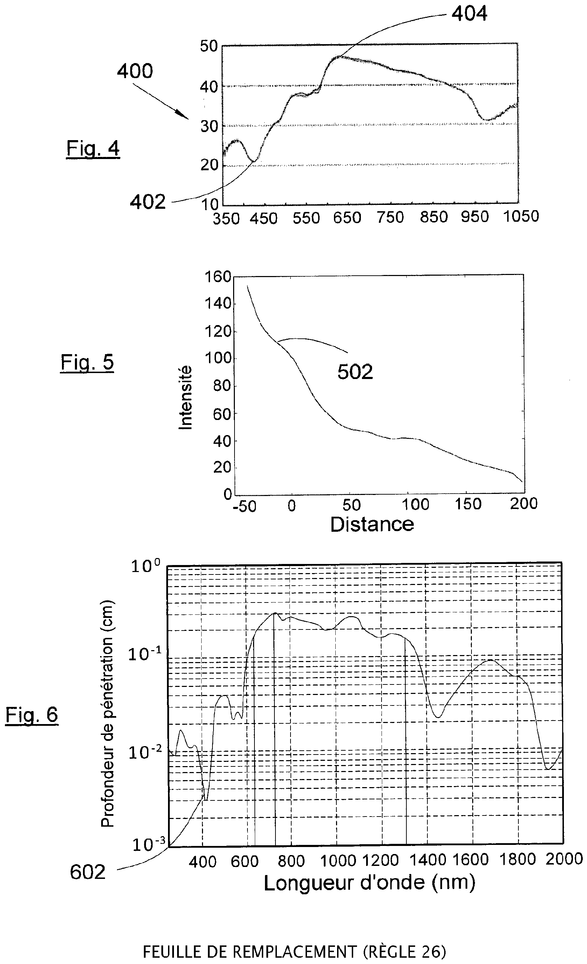

La Fig. 5 montre un exemple d'une courbe d'intensité 502 en fonction de la distance par rapport à la limite de la zone éclairée 202a-b correspondant à l'origine définie par la méthode décrite ci-dessus.

Pour que le doigt 10 soit validé, il faut que la courbe d'intensité et la courbe de gradient en fonction de la distance restent chacune entre deux bornes de références extraites des courbes de référence.

Il est également possible de mesurer en chaque point, l'écart de combien sortent la valeur d'intensité et la valeur du gradient dudit point par rapport aux deux bornes de références correspondantes et de sommer en valeur absolue ces écarts et de comparer cette somme à un seuil limite acceptable.

Les courbes de références sont ici les courbes d'intensité et de gradients d'intensité qui ont été établies avec un vaste panel de vrais doigts 10 et pour la longueur d'onde considérée.

Dans le cas d'une source lumineuse 102 circulaire, le découpage de la zone d'analyse 206a consiste, pour la ou chaque image 200a, à découper ladite image 200a en plusieurs anneaux 208a concentriques et centrés sur le centre de la zone éclairée 202a, dont au moins un anneau 208a se situe dans la zone éclairée 202a et dont au moins un anneau 208a se situe dans la zone de diffusion 204a, à calculer la moyenne d'intensité sur chaque anneau 208a des images préalablement traitées, à établir une courbe de la moyenne d'intensité ainsi calculée en fonction de la distance de l'anneau 208a à la limite de la zone éclairée 202a-b, et une courbe du gradient d'intensité en fonction de la distance de l'anneau 208a à la limite de la zone éclairée 202a-b et à comparer ces courbes à des courbes de référence, par exemple par différence et vérification par rapport à un seuil.

Les courbes de référence sont ici une courbe de la moyenne d'intensité en fonction de la distance de l'anneau 208a à la limite de la zone éclairée 202a et une courbe du gradient d'intensité en fonction de la distance de l'anneau 208a à la limite de la zone éclairée 202a-b qui ont été établies avec de vrais doigts 10 pour la longueur d'onde considérée.

Le module d'analyse 106 comporte alors en outre, pour la ou chaque image 200a, des moyens pour découper ladite image 200a en plusieurs anneaux 208a concentriques et centrés sur le centre de la zone éclairée 202a.

Dans le cas d'une source lumineuse 102 rectangulaire, le principe est similaire sauf que les zones de calcul 208b sont des bandes rectangulaires 208b et non des anneaux 208a. Le découpage de la zone d'analyse 206b consiste alors, pour la ou chaque image 200b, à découper ladite image 200b en plusieurs bandes rectangulaires 208b. Le module d'analyse 106 comporte alors en outre, pour la ou chaque image 200b, des moyens pour découper ladite image 200b en plusieurs bandes rectangulaires 208b dont les bords sont équidistants des bords de la zone éclairée 202b.

Lorsque la source lumineuse 102 émet dans au moins deux longueurs d'ondes distinctes, il est possible de combiner les résultats obtenus pour chaque longueur d'onde avec les résultats d'analyse pour chaque paire de longueurs d'ondes distinctes.

L'étape d'analyse 308 consiste alors en outre à établir, pour chaque zone de calcul 208a-b de ladite zone d'analyse 206a-b, la courbe du rapport d'intensité pour deux longueurs d'ondes distinctes en fonction de la distance de ladite zone de calcul 208a-b à la limite de la zone éclairée 202a-b et la courbe du rapport du gradient d'intensité pour deux longueurs d'ondes distinctes en fonction de la distance de ladite zone de calcul 208a-b à la limite de la zone éclairée 202a-b et à comparer des caractéristiques de ces courbes à celles extraites de courbes de référence.

Ainsi, le procédé effectue une analyse en relatif des grandeurs en fonction des longueurs d'ondes, en effectuant le rapport entre la grandeur (ici gradient d'intensité et intensité) mesurée pour une longueur d'onde avec la même grandeur pour une autre longueur d'onde. Dans la mesure où la vraie peau diffuse et absorbe d'une manière caractéristique selon les longueurs d'ondes et est difficilement imitable par un élément artificiel, cette analyse en relatif permet de faciliter la vérification de la véracité du doigt 10.

Les courbes de références sont ici les courbes de rapport d'intensité et de rapport de gradients d'intensité qui ont été établies avec un vaste panel de vrais doigts 10 et pour les deux longueurs d'ondes considérées.

Le module d'analyse 106 comporte alors en outre des moyens pour établir, pour chaque zone de calcul 208a-b de la zone d'analyse 206a-b, la courbe du rapport d'intensité pour deux longueurs d'ondes distinctes en fonction de la distance de ladite zone de calcul 208a-b à la limite de la zone éclairée 202a-b, et la courbe du rapport du gradient d'intensité pour deux longueurs d'ondes distinctes en fonction de la distance de ladite zone de calcul 208a-b à la limite de la zone éclairée 202a-b et des moyens pour comparer des caractéristiques de ces courbes à celles extraites de courbes de référence.

Dans les différents modes de réalisation présentés, il y a par exemple 5 à 50 anneaux et la différence de rayons entre deux anneaux consécutifs est de l'ordre de 0,1 à 0,3 mm selon la longueur d'onde utilisée.

Dans le cas d'une source lumineuse 102 à plusieurs longueurs d'ondes, le capteur 204 prend de préférence la forme d'une caméra présentant une sortie de signal pour chaque longueur d'onde Rouge-Vert-Bleu. La caméra est par exemple équipée d'un filtre Bayer ce qui permet en une seule capture de récupérer l'image 200a-b correspondant à chaque longueur d'onde sur la sortie de signal appropriée.

Selon un autre mode de réalisation particulier, la source lumineuse 102 émet une lumière blanche.

Dans un autre mode de réalisation à plusieurs longueurs d'ondes, il est possible d'utiliser une caméra monochrome et d'utiliser une source lumineuse émettant les différentes longueurs d'ondes les unes après les autres. On obtient alors une image pour chaque longueur d'onde et ce mode de réalisation permet en particulier d'utiliser une longueur d'onde en proche infrarouge.

Il est également envisageable que, pour chaque longueur d'onde, la zone du doigt 10 éclairée est différente. Il peut par exemple y avoir plusieurs sources lumineuses 102, chacune éclairant selon une longueur d'onde particulière et éclairant une zone différente du doigt 10.

La Fig. 4 montre la courbe de la réflectance 400 en pourcentage d'un vrai doigt 10 en fonction de la longueur d'onde en nm du flux lumineux qui l'éclaire.

La Fig. 6 montre la courbe de pénétration 602 en cm de la lumière dans la peau en fonction de la longueur d'onde. Cette courbe est liée à la courbe de la réflectance 400 par le fait que les longueurs d'ondes non absorbées par l'épiderme atteignant le derme qui est un tissu moins absorbant vont pouvoir être diffusées sur une distance plus élevée que les longueurs d'ondes restant dans l'épiderme.

Pour maximiser l'écart de comportement entre la réflexion et la diffusion, il est préférable de choisir des longueurs d'ondes ayant des comportements très différents sur un doigt 10.

Les courbes de réflectance 400 et de profondeur de pénétration 602 mettent en évidence ces comportements très différents. Dans les basses longueurs d'ondes, c'est-à-dire pour des longueurs d'ondes allant de 350 à 550 nm (UV, Bleu, Vert), la lumière reste dans les couches superficielles de la peau et est absorbée. Pour des longueurs d'ondes plus élevées, c'est-à-dire pour des longueurs d'ondes allant de 600 à 900 nm et au-delà (ambre/rouge, proche IR), la lumière pénètre dans le derme et y diffuse plus loin.

Ainsi dans les cas où deux longueurs d'ondes seront utilisées, le choix se portera préférentiellement vers une longueur d'onde entre 350 et 550 nm et une longueur d'onde supérieure à 600 nm. Par exemple, l'invention a été plus particulièrement décrite dans le cas d'une seule source lumineuse 102, mais il est possible d'avoir plusieurs sources lumineuses 102 pointant chacune sur une surface différente de l'élément 10 à valider

Il y aura alors autant de zones éclairées 202a et de zones de diffusion 204a qui subiront un traitement identique et qui permettront une consolidation entre plusieurs valeurs et ainsi éviter des fraudes complexes présentant des parties de vraies peaux et des parties de fausses peaux.

Il est possible d'avoir plusieurs zones éclairées, distinctes, non connexes et donc discontinues entre elles, comme par exemple des bandes parallèles, d'une matrice de points....

Dans ce cas, la distance séparant deux zones éclairées non-connexes distinctes est supérieure à au moins deux fois la distance minimale séparant la zone éclairée de la zone d'analyse,

## Revendications

1. Procédé de validation (300) destiné à valider qu'un élément (10) est recouvert d'une vraie peau et mis en œuvre par un dispositif de validation (100) comportant une source lumineuse (102) à au moins une longueur d'onde, un capteur (104), un module d'analyse (106) et un module de prise de décision (108), ledit procédé de validation (300) comportant:
- une étape de positionnement (302) au cours de laquelle une surface dudit élément (10) est placée devant la source lumineuse (102) et le capteur (104),
- une étape d'éclairement (304) au cours de laquelle la source lumineuse (102) éclaire ledit élément (10) par un éclairage non uniforme,
- une étape de capture (306) pour capturer, au moyen dudit capteur (104), pour la ou chaque longueur d'onde, une image (200a-b) dudit élément (10) ainsi positionné qui englobe une zone éclairée (202a-b) dudit élément (10) directement éclairée par le faisceau lumineux émis par la source lumineuse (102) et une zone périphérique dite zone de diffusion (204a-b) dudit élément (10) qui s'étend sur la périphérie de la zone éclairée (202a-b),
- une étape d'analyse (308) au cours de laquelle la ou chaque image (200a-b) ainsi capturée est analysée, et
- une étape de prise de décision (310) au cours de laquelle le module de prise de décision (108) prend une décision quant au fait que ledit élément (10) est recouvert d'une vraie peau en fonction des résultats de l'étape d'analyse (308), **caractérisé en ce que** l'étape d'analyse (308) consiste, pour la ou chaque image (200a-b), à découper une zone d'analyse (206a-b) recouvrant la zone éclairée (202a-b) et la zone de diffusion (204a-b) en plusieurs zones de calcul (208a-b) concentriques ayant une forme dépendante d'une forme de la source lumineuse, au moins une zone de calcul se situant dans la zone éclairée et au moins une zone de calcul se situant dans la zone de diffusion, à établir, une intensité moyenne pour chaque zone de calcul (208a-b), une courbe d'intensité et une courbe du gradient d'intensité en fonction d'une distance de la zone de calcul (208a-b) à une origine fixée sur une limite entre la zone éclairée (202a-b) et la zone de diffusion et à comparer des caractéristiques de ces courbes à celles extraites de courbes de référence, ladite limite étant déterminée par un processus de calibration basé sur l'acquisition d'une image de mire blanche non diffusante au travers du capteur sous ledit éclairage non uniforme fourni par ladite source lumineuse, la limite étant définie en chaque point limite d'un plateau d'intensité mesuré sur la mire blanche non diffusante.

2. Procédé de validation (300) selon la revendication 1, **caractérisé en ce que** la source lumineuse (102) émet dans au moins deux longueurs d'ondes distinctes, et **en ce que** l'étape d'analyse (308) consiste en outre à établir, pour chaque zone de calcul (208a-b) de ladite zone d'analyse (206), la courbe du rapport d'intensité pour deux longueurs d'ondes distinctes en fonction de la distance de ladite zone de calcul (208a-b) à la limite de la zone éclairée (202a-b), et la courbe du rapport du gradient d'intensité pour deux longueurs d'ondes distinctes en fonction de la distance de ladite zone de calcul (208a-b) à la limite de la zone éclairée (202a-b) et à comparer des caractéristiques de ces courbes à celles extraites de courbes de référence.

3. Procédé de validation (300) selon l'une des revendications 1 ou 2, **caractérisé en ce que** la source lumineuse (102) est rectangulaire, et **en ce que** le découpage de la zone d'analyse (206b) consiste, pour la ou chaque image (200b), à découper ladite image (200b) en plusieurs bandes rectangulaires (208b) dont les bords sont équidistants des bords de la zone éclairée (202b).

4. Procédé de validation (300) selon l'une des revendications 1 ou 2, **caractérisé en ce que** la source lumineuse (102) est circulaire, et **en ce que** le découpage de la zone d'analyse (206a) consiste, pour la ou chaque image (200a), à découper ladite image (200a) en plusieurs anneaux (208a) concentriques et centrés sur le centre de la zone éclairée (202a).

5. Procédé de validation (300) selon l'une des revendications 1 à 4, **caractérisé en ce que** la source lumineuse (102) émet dans une longueur d'onde entre 350 et 550 nm et une longueur d'onde supérieure à 600 nm.

6. Dispositif de validation (100) destiné à valider qu'un élément (10) est recouvert d'une vraie peau, ledit dispositif de validation (100) comportant:
- une source lumineuse (102) émettant au moins une longueur d'onde, et destinée à éclairer ledit élément (10) par un éclairage non uniforme,
- un capteur (104) configuré pour capturer, pour la ou chaque longueur d'onde, une image (200a-b) dudit élément (10) positionné devant la source lumineuse (102) et le capteur (104) qui englobe une zone éclairée (202a-b) dudit élément (10) directement éclairée par le faisceau lumineux émis par la source lumineuse (102) et une zone périphérique dite zone de diffusion (204a-b) dudit élément (10) qui s'étend sur la périphérie de la zone éclairée (202a-b),
- un module d'analyse (106) destiné à recevoir la ou chaque image (200a-b) capturée par le capteur (104) et à l'analyser, et
- un module de prise de décision (108) destiné à prendre une décision sur le fait que ledit élément (10) est recouvert d'une vraie peau, à partir des informations transmises par le module d'analyse (106), **caractérisé en ce que** le module d'analyse (106) comporte, pour la ou chaque image (200a-b), des moyens pour découper une zone d'analyse (206a-b) recouvrant la zone éclairée (202a-b) et la zone de diffusion (204a-b) en plusieurs zones de calcul (208a-b) concentriques ayant une forme dépendante d'une forme de la source lumineuse, au moins une zone de calcul se situant dans la zone éclairée et au moins une zone de calcul se situant dans la zone de diffusion, des moyens pour établir, pour chaque zone de calcul (208a-b), l'intensité moyenne de ladite zone de calcul (208a-b), pour établir une courbe d'intensité et une courbe du gradient d'intensité en fonction d'une distance de la zone de calcul (208a-b) à une origine fixée sur une limite entre la zone éclairée (202a-b) et la zone de diffusion et des moyens pour comparer des caractéristiques de ces courbes à celles extraites de courbes de référence, ladite limite étant déterminée par un processus de calibration basé sur l'acquisition d'une image de mire blanche non diffusante au travers du capteur sous ledit éclairage non uniforme fourni par ladite source lumineuse, la limite étant définie en chaque point limite d'un plateau d'intensité mesuré sur la mire blanche non diffusante.

7. Dispositif de validation (100) selon la revendication 6, **caractérisé en ce que** la source lumineuse (102) émet dans au moins deux longueurs d'ondes distinctes, **en ce que** le module d'analyse (106) comporte en outre des moyens pour établir, pour chaque zone de calcul (208a-b) de la zone d'analyse (206a-b), la courbe du rapport d'intensité pour deux longueurs d'ondes distinctes en fonction de la distance de ladite zone de calcul (208a-b) à la limite de la zone éclairée (202a-b), et la courbe du rapport du gradient d'intensité pour deux longueurs d'ondes distinctes en fonction de la distance de ladite zone de calcul (208a-b) à la limite de la zone éclairée (202a-b) et des moyens pour comparer des caractéristiques de ces courbes à celles extraites de courbes de référence.

8. Dispositif de validation (100) selon l'une des revendications 6 ou 7, **caractérisé en ce que** la source lumineuse (102) est rectangulaire, et **en ce que** le module d'analyse (106) comporte, pour la ou chaque image (200b), des moyens pour découper ladite image (200b) en plusieurs bandes rectangulaires (208b) dont les bords sont équidistants des bords de la zone éclairée (202b).

9. Dispositif de validation (100) selon l'une des revendications 6 ou 7, **caractérisé en ce que** la source lumineuse (102) est circulaire, et **en ce que** le module d'analyse (106) comporte, pour la ou chaque image (200a), des moyens pour découper ladite image (200a) en plusieurs anneaux (208a) concentriques et centrés sur le centre de la zone éclairée (202a).

## Patentansprüche

1. Validierungsverfahren (300) zum Validieren, dass ein Element (10) mit echter Haut bedeckt ist, und zum Implementieren durch eine Validierungsvorrichtung (100), umfassend eine Lichtquelle (102) mit mindestens einer Wellenlänge, einen Sensor (104), ein Analysemodul (106) und ein Entscheidungsfindungsmodul (108), wobei das Validierungsverfahren (300) umfasst:
- einen Positionierungsschritt (302), bei dem eine Oberfläche des Elements (10) vor der Lichtquelle (102) und dem Sensor (104) platziert wird,
- einen Beleuchtungsschritt (304), bei dem die Lichtquelle (102) das Element (10) mit einer ungleichmäßigen Beleuchtung beleuchtet,
- einen Erfassungsschritt (306), um mittels des Sensors (104) für die oder jede Wellenlänge ein Bild (200a-b) des so positionierten Elements (10) zu erfassen, das einen beleuchteten Bereich (202a-b) des Elements (10), der direkt durch den von der Lichtquelle (102) emittierten Lichtstrahl beleuchtet wird, und einen als Streubereich (204a-b) des Elements (10) bezeichneten peripheren Bereich, der sich am Umfang des beleuchteten Bereichs (202a-b) erstreckt, einschließt,
- einen Analyseschritt (308), bei dem das oder jedes so erfasste Bild (200ab) analysiert wird, und
- einen Entscheidungsfindungsschritt (310), bei dem das Entscheidungsfindungsmodul (108) abhängig von den Ergebnissen des Analyseschritts (308) eine Entscheidung darüber trifft, ob das Element (10) mit echter Haut bedeckt ist, **dadurch gekennzeichnet, dass** der Analyseschritt (308) für das oder jedes Bild (200a-b) darin besteht, einen Analysebereich (206a-b) einzuteilen, der den beleuchteten Bereich (202a-b) und den Streubereich (204a-b) durch mehrere konzentrische Berechnungsbereiche (208a-b) abdeckt, die eine von einer Form der Lichtquelle abhängige Form aufweisen, wobei sich mindestens ein Berechnungsbereich in dem beleuchteten Bereich befindet und sich mindestens ein Berechnungsbereich in dem Streubereich befindet, eine mittlere Intensität für jeden Berechnungsbereich (208a-b), eine Intensitätskurve und eine Kurve des Intensitätsgradienten in Abhängigkeit von einem Abstand des Berechnungsbereichs (208a-b) zu einem festgelegten Ursprung an einer Grenze zwischen dem beleuchteten Bereich (202a-b) und dem Streubereich zu ermitteln und Merkmale der Kurven mit jenen zu vergleichen, die aus Referenzkurven extrahiert wurden, wobei die Grenze durch ein Kalibrierverfahren bestimmt wird, das auf dem Erfassen eines nicht streuenden weißen Testmusterbildes durch den Sensor hindurch unter der von der Lichtquelle bereitgestellten ungleichmäßigen Beleuchtung basiert, wobei die Grenze an jedem Grenzpunkt von einem auf dem nicht streuenden weißen Testmuster gemessenen Intensitätsplateau definiert ist.

2. Validierungsverfahren (300) nach Anspruch 1, **dadurch gekennzeichnet, dass** die Lichtquelle (102) mit mindestens zwei verschiedenen Wellenlängen emittiert, und **dadurch, dass** der Analyseschritt (308) ferner darin besteht, für jeden Berechnungsbereich (208a-b) des Analysebereichs (206) die Kurve des Intensitätsverhältnisses für zwei verschiedene Wellenlängen in Abhängigkeit von der Entfernung des Berechnungsbereichs (208a-b) zu der Grenze des beleuchteten Bereichs (202a-b) und die Kurve des Verhältnisses des Intensitätsgradienten für zwei verschiedene Wellenlängen in Abhängigkeit von der Entfernung des Berechnungsbereichs (208a-b) zu der Grenze des beleuchteten Bereichs (202a-b) zu ermitteln und Merkmale dieser Kurven mit jenen zu vergleichen, die aus Referenzkurven extrahiert wurden.

3. Validierungsverfahren (300) nach einem der Ansprüche 1 oder 2, **dadurch gekennzeichnet, dass** die Lichtquelle (102) rechteckig ist und **dadurch, dass** die Einteilung des Analysebereichs (206b) für das oder jedes Bild (200b) darin besteht, das Bild (200b) in mehrere rechteckige Streifen (208b) einzuteilen, deren Ränder in gleichem Abstand zu den Rändern des beleuchteten Bereichs (202b) angeordnet sind.

4. Validierungsverfahren (300) nach einem der Ansprüche 1 oder 2, **dadurch gekennzeichnet, dass** die Lichtquelle (102) kreisförmig ist und **dadurch, dass** die Einteilung des Analysebereichs (206a) für das oder jedes Bild (200a) darin besteht, das Bild (200a) in mehrere Ringe (208a) einzuteilen, die konzentrisch sind und deren Zentrum das Zentrum des beleuchteten Bereichs (202a) ist.

5. Validierungsverfahren (300) nach einem der Ansprüche 1 bis 4, **dadurch gekennzeichnet, dass** die Lichtquelle (102) mit einer Wellenlänge zwischen 350 und 550 nm und einer Wellenlänge von über 600 nm emittiert.

6. Validierungsvorrichtung (100) zum Validieren, dass ein Element (10) mit echter Haut bedeckt ist, wobei die Validierungsvorrichtung (100) umfasst:
- eine Lichtquelle (102), die mindestens eine Wellenlänge emittiert und dazu bestimmt ist, das Element (10) mit ungleichmäßiger Beleuchtung zu beleuchten,
- einen Sensor (104), der dazu konfiguriert ist, für die oder jede Wellenlänge ein Bild (200a-b) des vor der Lichtquelle (102) und dem Sensor (104) positionierten Elements (10) zu erfassen, das einen beleuchteten Bereich (202a-b) des Elements (10), der direkt von dem von der Lichtquelle (102) emittierten Lichtstrahl beleuchtet wird, und einen als Streubereich (204a-b) bezeichneten peripheren Bereich des Elements (10), der sich am Umfang des beleuchteten Bereichs (202a-b) erstreckt, einschließt,
- ein Analysemodul (106) zum Empfangen des oder jedes von dem Sensor (104) erfassten Bildes (200a-b) und zum Analysieren desselben, und
- ein Entscheidungsfindungsmodul (108) zum Treffen einer Entscheidung darüber, ob das Element (10) mit echter Haut bedeckt ist, auf der Grundlage von Informationen, die von dem Analysemodul (106) übertragen werden, **dadurch gekennzeichnet, dass** das Analysemodul (106) für das oder jedes Bild (200a-b) Mittel zum Einteilen eines Analysebereichs (206a-b), der den beleuchteten Bereich (202a-b) und den Streubereich (204a-b) durch mehrere konzentrische Berechnungsbereiche (208a-b) abdeckt, die eine von einer Form der Lichtquelle abhängige Form aufweisen, wobei sich mindestens ein Berechnungsbereich in dem beleuchteten Bereich befindet und sich mindestens ein Berechnungsbereich in dem Streubereich befindet, Mittel zum Ermitteln, für jeden Berechnungsbereich (208a-b), einer mittleren Intensität des Berechnungsbereichs (208a-b) zum Ermitteln einer Intensitätskurve und einer Kurve des Intensitätsgradienten in Abhängigkeit von einem Abstand des Berechnungsbereichs (208a-b) zu einem festgelegten Ursprung an einer Grenze zwischen dem beleuchteten Bereich (202a-b) und dem Streubereich und Mittel zum Vergleichen von Merkmalen der Kurven mit jenen, die aus Referenzkurven extrahiert wurden, umfasst, wobei die Grenze durch ein Kalibrierverfahren vorbestimmt wird, das auf dem Erfassen eines nicht streuenden weißen Testmusterbildes durch den Sensor hindurch unter der von der Lichtquelle bereitgestellten ungleichmäßigen Beleuchtung basiert, wobei die Grenze an jedem Grenzpunkt von einem auf dem nicht streuenden weißen Testmuster gemessenen Intensitätsplateau definiert ist.

7. Validierungsvorrichtung (100) nach Anspruch 6, **dadurch gekennzeichnet, dass** die Lichtquelle (102) mit mindestens zwei verschiedenen Wellenlängen emittiert, **dadurch, dass** das Analysemodul (106) ferner Mittel zum Ermitteln, für jeden Berechnungsbereich (208a-b), des Analysebereichs (206a-b), der Kurve des Intensitätsverhältnisses für zwei verschiedene Wellenlängen in Abhängigkeit von der Entfernung des Berechnungsbereichs (208a-b) zu der Grenze des beleuchteten Bereichs (202a-b) und der Kurve des Verhältnisses des Intensitätsgradienten für zwei verschiedene Wellenlängen in Abhängigkeit von der Entfernung des Berechnungsbereichs (208a-b) zu der Grenze des beleuchteten Bereichs (202a-b) und Mittel zum Vergleichen von Merkmalen dieser Kurven mit jenen, die aus Referenzkurven extrahiert wurden, umfasst.

8. Validierungsvorrichtung (100) nach einem der Ansprüche 6 oder 7, **dadurch gekennzeichnet, dass** die Lichtquelle (102) rechteckig ist und **dadurch, dass** das Analysemodul (106) für das oder jedes Bild (200b) Mittel zum Einteilen des Bildes (200b) in mehrere rechteckige Streifen (208b) umfasst, deren Ränder in gleichem Abstand zu den Rändern des beleuchteten Bereichs (202b) angeordnet sind.

9. Validierungsvorrichtung (100) nach einem der Ansprüche 6 oder 7, **dadurch gekennzeichnet, dass** die Lichtquelle (102) kreisförmig ist und **dadurch, dass** das Analysemodul (106) für das oder jedes Bild (200a) Mittel zum Einteilen des Bildes (200a) in mehrere Ringe (208a) umfasst, die konzentrisch sind und deren Zentrum das Zentrum des beleuchteten Bereichs (202a) ist.

## Claims

1. A validation method (300) for validating that an element (10) is covered with true skin and implemented by a validation device (100) comprising a light source (102) at at least one wavelength, a sensor (104), an analysis module (106) and a decision-making module (108), said validation method (300) comprising:
- a positioning step (302) in which a surface of said element (10) is placed in front of the light source (102) and the sensor (104),
- an illumination step (304) in which the light source (102) illuminates said element (10) with non-uniform illumination,
- a capture step (306) for capturing, by means of said sensor (104), for the or each wavelength, an image (200a-b) of said element (10) thus positioned which encompasses an illuminated zone (202a-b) of said element (10) directly illuminated by the light beam emitted by the light source (102) and a peripheral zone called the scattering zone (204a-b) of said element (10) which extends on the periphery of the illuminated zone (202a-b),
- an analysis step (308) in which the or each image (200a-b) thus captured is analyzed, and
- a decision-making step (310) in which the decision-making module (108) makes a decision as to whether said element (10) is covered by a true skin based on the results of the analysis step (308), **characterized in that** the analysis step (308) consists, for the or each image (200a-b), of cutting an analysis zone (206a-b) that covers the illuminated zone (202a-b) and the scattering zone (204a-b) into several concentric calculation zones (208a-b) having a shape dependent on a shape of the light source, at least one calculation zone being located in the illuminated zone and at least one calculation zone being located in the scattering zone, of establishing an average intensity for each calculation zone (208a-b), an intensity curve and an intensity gradient curve as a function of a distance of the calculation zone (208a-b) to an origin fixed on a boundary between the illuminated zone (202a-b) and the scattering zone, and of comparing characteristics of these curves with those extracted from reference curves, said boundary being determined by a calibration process based on the acquisition of a non-diffusing white test image through the sensor under said non-uniform illumination provided by said light source, the boundary being defined at each boundary point of an intensity tray measured on the non-diffusing white test image.

2. The validation method (300) according to claim 1, **characterized in that** the light source (102) emits in at least two distinct wavelengths, and **in that** the analysis step (308) further consists in establishing, for each calculation zone (208a-b) of said analysis zone (206) the intensity ratio curve for two distinct wavelengths based on the distance of said calculation zone (208a-b) to the boundary of the illuminated zone (202a-b), and the intensity gradient ratio curve for two distinct wavelengths based on the distance of said calculation zone (208a-b) to the boundary of the illuminated zone (202a-b), and in comparing characteristics of these curves with those extracted from reference curves.

3. The validation method (300) according to one of claims 1 or 2, **characterized in that** the light source (102) is rectangular, and **in that** the cutting of the analysis zone (206b) consists, for the or each image (200b), in cutting said image (200b) into several rectangular strips (208b) whose edges are equidistant from the edges of the illuminated zone (202b).

4. The validation method (300) according to one of claims 1 or 2, **characterized in that** the light source (102) is circular, and **in that** the cutting of the analysis zone (206a) consists, for the or each image (200a), in cutting said image (200a) into several concentric rings (208a) centered on the center of the illuminated zone (202a).

5. The validation method (300) according to any of claims 1 to 4, **characterized in that** the light source (102) emits in a wavelength between 350 and 550 nm and a wavelength above 600 nm.

6. A validation device (100) for validating that an element (10) is covered with a true skin, said validation device (100) comprising:
- a light source (102) emitting at least one wavelength, and intended for illuminating said element (10) with non-uniform illumination,
- a sensor (104) configured to capture, for the or each wavelength, an image (200a-b) of said element (10) positioned in front of the light source (102), and the sensor (104) which encompasses an illuminated zone (202a-b) of said element (10) directly illuminated by the light beam emitted by the light source (102) and a peripheral zone called a scattering zone (204a-b) of said element (10) that extends on the periphery of the illuminated zone (202a-b),
- an analysis module (106) intended for receiving the or each image (200a-b) captured by the sensor (104) and analyzing it, and
- a decision-making module (108) intended to make a decision as to whether said element (10) is covered by a true skin, based on information transmitted by the analysis module (106), **characterized in that** the analysis module (106) comprises, for the or each image (200a-b), means for cutting an analysis zone (206a-b) covering the illuminated zone (202a-b) and the scattering zone (204a-b) into several concentric calculation zones (208a-b) having a shape dependent on a shape of the light source, at least one calculation zone being located in the illuminated zone and at least one calculation zone being located in the scattering zone, means for establishing, for each calculation zone (208a-b), the average intensity of said calculation zone (208a-b), to establish an intensity curve and an intensity gradient curve as a function of a distance of the calculation zone (208a-b) to an origin fixed on a boundary between the illuminated zone (202a-b) and the scattering zone, and means for comparing characteristics of these curves with those extracted from reference curves, said boundary being determined by a calibration process based on the acquisition of a non-diffusing white test image through the sensor under said non-uniform illumination provided by said light source, the boundary being defined at each boundary point of an intensity tray measured on the non-diffusing white test image.

7. The validation device (100) according to claim 6, **characterized in that** the light source (102) emits in at least two distinct wavelengths, and **in that** the analysis module (106) further comprises means for establishing, for each calculation zone (208a-b) of the analysis zone (206a-b), the intensity ratio curve for two distinct wavelengths based on the distance of said calculation zone (208a-b) to the boundary of the illuminated zone (202a-b), and the intensity gradient ratio curve for two distinct wavelengths based on the distance of said calculation zone (208a-b) to the boundary of the illuminated zone (202a-b), and means for comparing characteristics of these curves with those extracted from reference curves.

8. The validation device (100) according to one of claims 6 or 7, **characterized in that** the light source (102) is rectangular, and **in that** the analysis module (106) comprises, for the or each image (200b), of means for cutting said image (200b) into several rectangular strips (208b) whose edges are equidistant from the edges of the illuminated zone (202b).

9. The validation device (100) according to one of claims 6 or 7, **characterized in that** the light source (102) is circular, and **in that** the analysis module (106) comprises, for the or each image (200a), means for cutting said image (200a) into several concentric rings (208a) centered on the center of the illuminated zone (202a).
